# FASCICULE DE BREVET EUROPEEN

(11) **EP 0 716 273 B1**
(45) Date de publication et mention de la délivrance du brevet: **18.03.1998**
(21) Numéro de dépôt: 95470041.5
(22) Date de dépôt: 29.11.1995
(51) Int. Cl.: F24D 19/10, G05D 23/19

(54) **Système de chauffage comprenant une centrale de commande et des radiateurs munis de moyens de détection de présence**
Heizungsanlage mit Zentralsteuereinheit und Heizkörper mit Anordnung zur Feststellung der Anwesenheit
Heating system having a central control unit and radiators with presence detecting means

(30) Priorité: 09.12.1994 FR 9415150
(43) Date de publication de la demande: 12.06.1996
(73) Titulaire: SGS-THOMSON MICROELECTRONICS S.A., 94250 Gentilly (FR)
(72) Inventeur: Le van Suu, Maurice, Cabinet Ballot Schmit, F-57000 Metz (FR)
(74) Mandataire: Schmit, Christian Norbert Marie

(56) Documents cités:
- FR-A- 2 521 320
- FR-A- 2 549 616
- FR-A- 2 615 972
- GB-A- 2 194 088
- US-A- 4 500 034
- US-A- 4 514 729

## Description

L'invention concerne un système de chauffage comprenant une centrale de commande et des radiateurs munis de moyens de détection de présence et d'alarmes de sécurité.

Actuellement, on trouve deux types de système de chauffage dans les logements.

Un premier type de système, dit décentralisé, est le plus répandu. Dans ce type de système, les radiateurs fonctionnent indépendamment les uns des autres. Ils sont chacun munis d'un thermostat et de moyens de réglage pour fixer une température de consigne. Ce type de système est peu pratique car il impose à l'utilisateur de se déplacer physiquement pour régler individuellement tous les radiateurs de son logement.

Un deuxième type de système, dit centralisé, permet de fixer des températures de consigne à chaque radiateur à partir d'une centrale de commande qui envoit des informations en ce sens aux radiateurs. L'utilisateur peut ainsi programmer son système à partir de la centrale, sans avoir à se déplacer. Il choisira par exemple une gestion hebdomadaire ou mensuelle de son système en programmant des températures de consigne en fonction de l'heure de la journée ou du jour du mois, en fonction des différentes pièces du logement etc. Un inconvénient de ce système automatique, est qu'il fonctionne indépendamment de la présence effective ou non de l'utilisateur. Par exemple, l'utilisateur, pour des raisons économiques, aura tendance à moins chauffer les pièces dans lesquelles il se rend peu souvent, ou irrégulièrement. Quand il se rendra dans une telle pièce, il devra en pratique agir au niveau du radiateur ou modifier le programme de la centrale s'il souhaite changer la température de la pièce. De même, s'il s'absente d'une pièce, la température dans celle-ci sera maintenue s'il ne dérègle pas le système.

Le document FR-A-2 521 320 décrit un système de chauffage comportant une centrale de commande et des boitiers périphériques qui agissent sur des éléments de chauffage de sorte que la centrale de commande communique avec chacun des boitiers, obligeant la dite centrale à travailler en permanence.

Un but de l'invention est de pallier à ces inconvénients en proposant un système mixte dans lequel une centrale de commande permet de commander à distance des températures de consigne, et dans lequel les radiateurs sont équipés de manière à adapter leur fonctionnement en fonction de l'utilisation en temps réel du logement. De cette manière, il ne sera plus nécessaire pour l'utilisateur de dérégler de manière locale le programme de chauffage.

Ainsi, l'invention propose un système de chauffage d'un logement, comprenant une centrale de commande et plusieurs radiateurs reliés à un médium de communication pour échanger, avec la centrale, des informations et des commandes, chacun des radiateurs étant équipé de moyens de détection de présence pour produire une information de présence d'une personne, caractérisé en ce que chaque radiateur comporte des moyens de traitement d'information pour traiter cette information de présence et de moyens de communication qui sont agencés pour permettre aux radiateurs de communiquer directement entre eux.

Dans une version préférée, le système comprend deux modes de fonctionnement :
- un premier mode dit de chauffage dans lequel les moyens de traitement d'information commandent des moyens de chauffage, en fonction de consignes de température reçues de la centrale de chauffage par le biais des moyens de communication, quand ils reçoivent une information de présence,
- un deuxième mode dit d'alarme contre l'intrusion, dans lequel les moyens de traitement d'information envoient à la centrale de commande, par le biais des moyens de communication, un message d'alarme quand ils reçoivent une information de présence.

L'inventeur propose donc de combiner dans le système de chauffage de l'invention, d'une part un système de chauffage proprement dit, et d'autre part un système d'alarme contre l'intrusion en utilisant les moyens de détection de présence des radiateurs.

Généralement, les systèmes de chauffage classiques sont utilisés durant une partie seulement de l'année, typiquement de l'automne au printemps, dans les pays tempérés. De même les systèmes d'alarme sont généralement utilisés uniquement quand les logements sont vides. Dans un cas comme dans l'autre, l'investissement engagé pour mettre en place ces systèmes n'est pas amorti si on ne les utilise pas. Par ailleurs, l'installation de systèmes de chauffage et d'alarme indépendants accroît les coûts d'installation, de fonctionnement, et de maintenance. L'indépendance des systèmes implique des gestions indépendantes de ces systèmes. Ainsi, lors d'un départ en vacances par exemple, l'utilisateur sera amené à devoir se préoccuper d'une part de la mise en veille de son système de chauffage et d'autre part de la mise en route de son système d'alarme. L'invention permet de pallier à ces inconvénients.

Avantageusement, les radiateurs comprendront des moyens de détection de fumée.

De même que précédemment on n'aura pas à installer des systèmes indépendants. Par ailleurs, il est d'autant plus intéressant de coupler un détecteur de fumée à un radiateur que nombre d'incendies sont provoqués par des radiateurs électriques, soit à la suite d'un dysfonctionnement, soit par négligence (présence de linges ou de rideaux couvrant des convecteurs électriques par exemple).

Dans une version préférée, le médium de communication est le réseau de distribution électrique du logement.

La communication par courant porteur est simple à mettre en oeuvre et évite d'avoir à monter un médium dédié uniquement à l'échange d'informations dans le système.

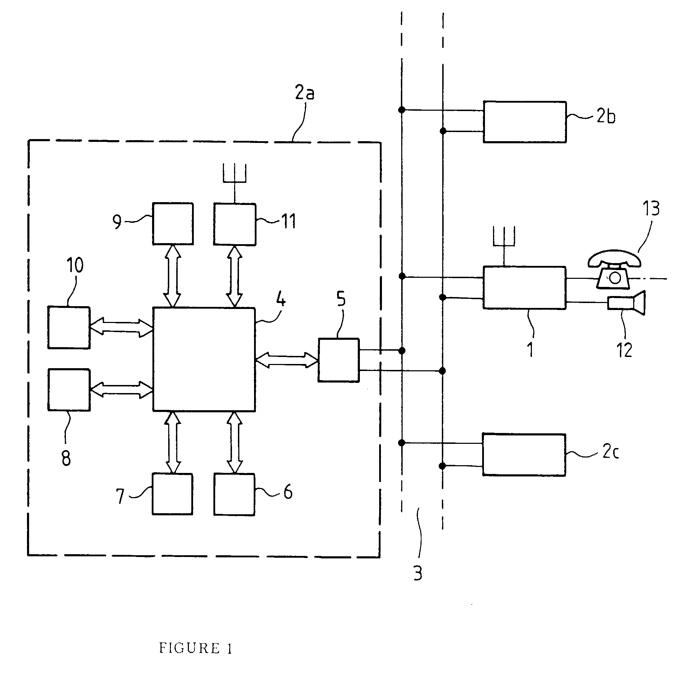

D'autres avantages et particularités apparaîtront à à la lecture de la description détaillée qui suit d'un exemple de réalisation de l'invention, donnée à titre indicatif et nullement limitatif, et faite en référence au dessin annexé dans lequel la figure 1 représente un diagramme schématique d'un système de chauffage réalisé conformément à l'invention.

Le système représenté à la figure 1 comprend :
- une centrale de commande 1,
- des radiateurs 2a, 2b et 2c,
- un médium de communication 3 auquel sont reliés la centrale de commande 1 et le radiateur 2, afin de permettre à la centrale de commande 1 et au radiateur 2 de communiquer.

Avantageusement on utilisera le réseau de distribution électrique comme médium de communication, la communication s'effectuant par courant porteur. Les communications s'effectueront classiquement sous la forme d'échanges de messages binaires, chaque appareil relié au médium ayant une adresse particulière.

La centrale de commande sera équipée d'un microprocesseur et d'une interface utilisateur, comprenant par exemple un clavier et un écran, pour permettre à l'utilisateur de programmer le fonctionnement du système et la ou les températures de consigne de chaque radiateur.

Le radiateur 2a, décrit à titre d'exemple, comprend:
- des moyens de traitement d'information, par exemple un microcontrôleur 4, pour gérer le fonctionnement du radiateur,
- des moyens de communication ou modem 5, reliés d'une part au microcontrôleur 4 et d'autre part au médium de communication 3, pour permettre la transmission d'informations du radiateur 2 vers la centrale de commande 1, et la réception d'informations ou de commande issues de la centrale de commande 1 en direction du radiateur 2,
- un circuit de chauffage 6 comprenant par exemple une résistance de charge (si le radiateur est un convecteur électrique) montée en série avec un triac, ce circuit de chauffage 6 étant relié au microcontrôleur 4 qui le contrôle (par exemple en agissant sur la commande du triac),
- un thermostat 7, relié au microcontrôleur 4, pour lui fournir une information de température sur la température ambiante, ce qui permettra à ce dernier de commander le circuit de chauffage 6 en fonction de la valeur de la température ambiante,
- une interface utilisateur 8, reliée au microcontrôleur 4, et comprenant par exemple un bouton de marche-arrêt du radiateur et une diode indiquant de manière optique si le radiateur est en état de marche ou à l'arrêt,
- des circuits de détection de présence 9, reliés au microcontrôleur 4 pour produire une information de présence sous la forme d'un message numérique quand une personne est à proximité du radiateur 2, cette information de présence étant fournie au microcontrôleur 4.

On ne rentrera pas en détail dans la composition de ces différents éléments, étant entendu qu'il sont connus de l'homme du métier.

Les moyens de détection de présence 9 comprennent par exemple un ou plusieurs des dispositifs suivants :
- dispositif de détection volumétrique,
- dispositif de détection par infrarouge,
- dispositif de détection de chaleur,
- dispositif de détection de modification de luminosité ambiante.

Le radiateur 2a comprend également un dispositif détecteur de fumée 10 classique, relié au microcontrôleur 4, afin que ce dernier envoie un message d'alarme à la centrale de commande 1 si une fumée est détectée.

Du point de vue de son fonctionnement, le système comprend deux modes de fonctionnement :
- un premier mode, dit de chauffage, et
- un deuxième mode, dit d'alarme.

Dans le mode de chauffage, les radiateurs fonctionneront en éléments chauffants. Par exemple, l'utilisateur programmera pour chaque radiateur deux températures de consigne. Une première température dite de veille correspondra à la température que devra maintenir localement chaque radiateur en l'absence d'une présence au niveau local. Une deuxième température dite de confort correspondra à la température que devra maintenir localement chaque radiateur si une présence est détectée. Ces températures de consigne seront communiquées, sous forme de messages numériques dits consignes de température, aux radiateurs par la centrale de commande 1, par le biais du médium de communication 3. On utilisera un protocole de communication domotique classique avec, par exemple, envoi d'un message de confirmation des radiateurs à la centrale de commande.

Si une présence est détectée par un radiateur à proximité de celui-ci, le microcontrôleur du radiateur va recevoir une information de présence de son circuit de détection de présence et agir en conséquence sur son circuit de chauffage en fonction de la température de confort programmée. Par proximité d'un radiateur, on entend bien sûr la zone de champ de détection de ses moyens de détection. De préférence, chaque radiateur aura mémorisé dans une mémoire les températures de consigne afin de pouvoir fonctionner sans avoir à communiquer avec la centrale de commande. Le circuit de détection de présence pourra effectuer des mesures soit de manière continue, soit de manière périodique. On pourra programmer en même temps que les températures de consigne des délais temporels, pour chaque radiateur ou pour tous les radiateurs, de manière à revenir à la température de veille si, suite à la détection d'une présence, cette présence n'est pas confirmée ultérieurement. On pourra choisir de perfectionner le système en prévoyant de corréler les informations de présence entre elles. Ainsi, par exemple, si un radiateur détecte une présence dans une pièce et qu'un radiateur voisin détecte ultérieurement une présence, le premier radiateur reviendra en température de veille et le second passera en température de confort. Pour ce faire, les radiateurs communiqueront entre eux ou, plus simplement, enverront des messages à la centrale de commande qui s'occupera de gérer les radiateurs en leur envoyant des messages de commande. On pourra ainsi avoir des délais temporels de retour à la température de veille variables et adaptés à la position de l'utilisateur dans le logement, favorisant ainsi une économie d'énergie.

D'autres modes de chauffage plus complexes sont possibles sans modifier le dispositif. On peut en effet prévoir le chauffage d'une pièce possédant plusieurs radiateurs équipé de capteur de présence et de capteurs de mouvement. Si personne se trouve dans la pièce, les radiateurs maintiennent la température de veille. Si par contre une présence en mouvement est détectée, les radiateurs pourront utiliser une première température de confort. Si par contre la présence devient immobile, par exemple la personne s'assied dans un fauteuil, les radiateurs peuvent comparer entre eux leurs informations de présence pour déterminer quels sont les radiateurs les plus près afin que ceux-ci fonctionnent avec une deuxième température de confort, les autres pouvant soit maintenir la première température de confort soit revenir à une température de veille. Un tel fonctionnement nécessite de nombreux échanges entre les radiateurs; si les échanges doivent passer par la centrale de commande, le nombre de communication va être automatiquement multiplié par deux. Le fait d'augmenter les communications en courant porteur peut entraîner des collisions, voire de la perte d'information, il est donc préférable que les radiateurs communiquent directement entre eux, cela permettant en plus de palier aux défaillances éventuelles de la centrale de commande.

Le fait de permettre aux radiateurs de communiquer directement entre eux permet également de mettre la centrale de commande en veille et même de la déconnecter, par exemple pour des opérations de maintenance, sans remettre en cause le fonctionnement de l'installation de chauffage.

On pourra bien sûr prévoir un réglage local des radiateurs. Leur interface 8 comprendra alors classiquement un potentiomètre de réglage, permettant d'imposer une température de chauffage non programmée. Cela permettra par exemple de chauffer une pièce alors que personne n'y est présent, sans avoir à reprogrammer la température de veille de cette pièce. On pourra aussi programmer la température de confort au niveau du radiateur, par le biais de ce même potentiomètre.

On pourra également prévoir des modes de fonctionnement en veille utilisant plusieurs températures en fonction de l'heure, du jour ou de la tarification du courant. S'il s'agit d'une installation dans des bureaux, la température de veille pourra par exemple decendre jusqu'à sept degré pendant le week-end et remontera par exemple à quatorze pendant la nuit de dimanche à lundi dans un créneaux horaire où la tarification électrique est en heures creuses. Un tel mode de fonctionnement peut être géré par la centrale ou directement par les radiateurs.

On pourra prévoir un commutateur au niveau de la centrale de commande pour que l'utilisateur puisse imposer à tous les radiateurs de se maintenir en température de veille s'il s'absente.

Dans le mode d'alarme, si un radiateur détecte une présence dans sa proximité ou de la fumée, le microcontrôleur de ce radiateur envoie à la centrale de commande, par le biais du modem 5 associé, un message d'alarme indiquant une présence. La centrale de commande répercute alors ce message, soit en déclenchant une sirène 12, soit par exemple par le biais du réseau téléphonique 13. On équipera alors la centrale de commande pour la numérotation d'appel automatique.

On pourra aussi prévoir un mode de décrochage téléphonique automatique pour permettre l'accès à la centrale de commande via la ligne téléphonique, de préférence en conditionnant cet accès à la connaissance d'un code d'accès. L'utilisateur peut ainsi accéder à la centrale de commande, par le biais du réseau téléphonique et de son code d'accès, et donner un ordre de mise en marche du mode alarme s'il a oublié de le faire avant de s'absenter de son logement. De même l'utilisateur pourra avoir programmé plusieurs programmes de chauffage et modifier le programme par téléphone, par exemple la veille de retour de vacances.

La mise en marche du mode alarme se fera par exemple quand l'utilisateur passera en mode de veille s'il s'absente, par le commutateur déjà évoqué. Pour arrêter le mode alarme, et repasser en mode chauffage, on utilisera classiquement une clé, ou bien on rentrera un code sur un pavé numérique, au niveau de la centrale de commande.

A titre de redondance des moyens de communication, on pourra équiper la centrale de commande et les radiateurs de moyens de communication par voie hertzienne 11.

Dans un but de dissimulation de la centrale de commande, celle-ci pourra être inclue dans un des radiateurs de l'installation. Le radiateur faisant office de centrale de commande ne présentant pas de différence apparente avec les autres radiateurs, il sera muni de moyens de liaison dissimulés pour pouvoir dialoguer avec avec une interface utilisateur. L'interface utilisateur peut également utiliser les courants porteurs pour dialoguer avec la centrale de commande. Un ordinateur de type compatible PC muni d'une interface de communication sur courants porteurs convient parfaitement.

Dans un but de redondance de sécurité, on peut avoir plusieurs radiateurs qui auront pour rôle de devenir une centrale d'alarme en cas de défaillance de la première centrale d'alarme. Il suffira en fait de choisir des radiateurs qui sont placés à proximité du passage de la ligne téléphonique afin de pouvoir dissimuler au mieux les raccords téléphoniques.

## Revendications

1. Système de chauffage d'un logement, comprenant une centrale de commande (1) et plusieurs radiateurs (2a, 2b, 2c) reliés à un médium de communication (3) pour échanger, avec la centrale (1), des informations et des commandes, chacun des radiateurs (2a,2b,2c) étant équipé de moyens de détection de présence (9) pour produire une information de présence d'une personne, caractérisé en ce que chaque radiateur (2a,2b,2c) comporte des moyens de traitement d'information (4) pour traiter cette information de présence et des moyens de communication (5) qui sont agencés pour permettre aux radiateurs de communiquer directement entre eux.

2. Système selon la revendication 1, caractérisé en ce que le système comprend deux modes de fonctionnement :
- un premier mode dit de chauffage dans lequel les moyens de traitement d'information (4) commandent des moyens de chauffage (6), quand ils reçoivent une information de présence, en fonction de consignes de température reçues de la centrale de commande (1) par le biais des moyens de communication (5),
- un deuxième mode dit d'alarme contre l'intrusion, dans lequel les moyens de traitement d'information (4) envoient à la centrale de commande (1), par le biais des moyens de communication (5), un message d'alarme quand ils reçoivent une information de présence.

3. Système selon l'une des revendications 1 à 2, caractérisé en ce que les moyens de détection de présence (9) comprennent des moyens de détection volumétrique.

4. Système selon l'une des revendications 1 à 3, caractérisé en ce que les moyens de détection de présence (9) comprennent des moyens de détection par infrarouge.

5. Système selon l'une des revendications 1 à 4, caractérisé en ce que les moyens de détection de présence (9) comprennent des moyens de détection de modification de luminosité.

6. Système selon l'une des revendications 1 à 5, caractérisé en ce que les radiateurs (2a,2b,2c) comprennent des moyens de détection de fumée.

7. Système selon l'une des revendications 1 à 6, caractérisé en ce que le médium de communication (3) est le réseau de distribution électrique du logement.

8. Système selon l'une des revendications 1 à 7, caractérisé en ce que la centrale de commande (1) et les radiateurs (2a,2b,2c) sont équipés de moyens de communication (5) par voie hertzienne.

## Patentansprüche

1. Heizungssystem für eine Wohnung, das eine Steuerzentrale (1) und mehrere Heizkörper (2a, 2b, 2c) aufweist, die mit einem Kommunikationsmedium (3) verbunden sind, um Informationen und Steuerbefehle mit der Zentrale (1) auszutauschen, wobei jeder der Heizkörper (2a, 2b, 2c) mit Mitteln zur Anwesenheits-Erfassung (9) ausgestattet ist, um eine Information über die Anwesenheit einer Person zu erzeugen, dadurch gekennzeichnet, daß jeder Heizkörper (2a, 2b, 2c) Mittel zur Informationsverarbeitung (4), um diese Anwesenheits-Information zu verarbeiten, und Kommunikationsmittel (5) aufweist, die so ausgebildet sind, daß sie es den Heizkörpern ermöglichen, direkt miteinander in Verbindung zu treten.

2. System nach Anspruch 1, dadurch gekennzeichnet, daß das System zwei Betriebsarten enthält:
- eine erste Betriebsart, Heizung genannt, bei der die Mittel zur Informationsverarbeitung (4) Heizmittel (6) steuern, wenn sie eine Anwesenheits-Information empfangen, in Abhängigkeit von von der Heizungszentrale (1) über die Kommunikationsmittel (5) empfangenen Temperatur-Sollwerten,
- eine zweite Betriebsart, Eindring-Alarm genannt, bei der die Mittel zur Informationsverarbeitung (4) mittels der Kommunikationsmittel (5) eine Alarmmeldung an die Steuerzentrale (1) senden, wenn sie eine Anwesenheits-Information empfangen.

3. System nach einem der Ansprüche 1 bis 2, dadurch gekennzeichnet, daß die Anwesenheits-Erfassungsmittel (9) volumetrische Erfassungsmittel aufweisen.

4. System nach einem der Ansprüche 1 bis 3, dadurch gekennzeichnet, daß die Anwesenheits-Erfassungsmittel (9) Infrarot-Erfassungsmittel aufweisen.

5. System nach einem der Ansprüche 1 bis 4, dadurch gekennzeichnet, daß die Anwesenheits-Erfassungsmittel (9) Mittel zur Erfassung der Veränderung der Lichtstärke aufweisen.

6. System nach einem der Ansprüche 1 bis 5, dadurch gekennzeichnet, daß die Heizkörper (2a, 2b, 2c) Mittel zur Erfassung von Rauch aufweisen.

7. System nach einem der Ansprüche 1 bis 6, dadurch gekennzeichnet, daß das Kommunikationsmedium (3) das Stromverteilungsnetz der Wohnung ist.

8. System nach einem der Ansprüche 1 bis 7, dadurch gekennzeichnet, daß die Steuerzentrale (1) und die Heizkörper (2a, 2b, 2c) mit Funk-Kommunikationsmitteln (5) ausgestattet sind.

## Claims

1. System for heating a dwelling, comprising a central control unit (1) and several radiators (2a, 2b, 2c) connected to a communication medium (3) for exchanging information and commands with the central unit (1), each of the radiators (2a, 2b, 2c) being equipped with presence detection means (9) for producing an item of information on the presence of a person, characterised in that each radiator (2a, 2b, 2c) has information processing means (4) for processing this presence information and communication means (5) which are arranged to enable the radiators to communicate directly with each other.

2. System according to Claim 1, characterised in that the system comprises two operating modes:
- a first so-called heating mode in which the information processing means (4) control heating means (6), when they receive an item of presence information, according to set temperature values received from the central control unit (1) through the communication means (5),
- a second so-called intrusion alarm mode, in which the information processing means (4) send to the central control unit (1), through the communication means (3), an alarm message when they receive an item of presence information.

3. System according to one of Claims to 2, characterised in that the presence detection means (9) comprise volumetric detection means.

4. System according to one of Claims 1 to 3, characterised in that the presence detection means (9) comprise infrared detection means.

5. System according to one of Claims 1 to 4, characterised in that the presence detection means (9) comprise means for detecting a change in luminosity.

6. System according to one of Claims 1 to 5, characterised in that the radiators (2a, 2b, 2c) comprise smoke detection means.

7. System according to one of Claims 1 to 6, characterised in that the communication medium (3) is the electrical distribution system in the dwelling.

8. System according to one of Claims 1 to 7, characterised in that the central control unit (1) and the radiators (2a, 2b, 2c) are equipped with radio communication means (5).
